Europäisches Patentamt

(19) **European Patent Office**

**Office européen des brevets**

(11) Publication number: **0 246 336**
**B1**

(12) # EUROPEAN PATENT SPECIFICATION

(45) Date of publication of the patent specification:
25.07.90

(51) Int. Cl.⁵: **H02J 7/00**

(21) Application number: **86106692.6**

(22) Date of filing: **16.05.86**

(54) **Multistation modular charging system for cordless devices.**

(43) Date of publication of application:
**25.11.87 Bulletin 87/48**

(45) Publication of the grant of the patent:
**25.07.90 Bulletin 90/30**

(84) Designated Contracting States:
**AT BE CH DE FR GB IT LI LU NL SE**

(56) References cited:
**EP-A- 0 203 847**
**FR-A- 1 240 286**
**FR-A- 1 533 378**
**US-A- 3 696 283**
**US-A- 3 943 423**
**US-A- 4 591 777**

(73) Proprietor: **SOLID STATE CHARGERS, INC.,**
**105 Lakefront Drive, Cockeysville Maryland 21030(US)**

(72) Inventor: **McCarty, George W., 214 Welford Road,**
**Lutherville Maryland 21093(US)**
Inventor: **Smith III, Somers Hanson, 6044 Waterloo Road,**
**Columbia Maryland 21045(US)**

(74) Representative: **Patentanwälte, Dipl.-Ing. Klaus**
**Westphal Dr. rer. nat. Bernd Mussgnug Dr. rer. nat. Otto**
**Buchner, Flossmannstrasse 30a,**
**D-8000 München 60(DE)**

## Description

The present invention relates to a multistation charging system according to the generic part of claim 1.

A charging system of this kind is known from FR-A 1 240 286. The known charging system is not adapted for charging batteries within cordless devices without taking the batteries out of those devices. While the known system is comprising a single source of approximately constant d.c. charging current it would be desirable to provide for a more precise charging of the batteries. Further with the known system it is necessary to have a return conductor connected to the last charging station to close the electrical circuit.

In modern households where a growing dependency on power tools and appliances is clear, there is a need for storing such tools and appliances in an orderly fashion, usually in a storage closet or in a kitchen, workshop area, garage, basement or the like. Since in many cases such tools and appliances are hung on a rack-like device or stored in an array of compartments or trays, the need for recharging such devices in an orderly and simple manner is desirable, especially if many or all of such appliances and tools are to be charged at the same time by a common means or system in which selected tools or appliances can be removed for use without affecting the charging operation of the remaining tools and appliances and, further, wherein additional tools and appliances can be added into the charging system without changing that system.

It is the aim of the present invention to provide a multistation modular charging system for a plurality of cordless devices, such as tools, battery power packs, appliances and the like.

According to the invention this problem is solved by the features of claim 1.

With the charging system according to this invention batteries may be charged remaining within the cordless devices, and they will be charged by a current regulated source delivering charging current pulses. By simply putting together the respective charging stations the transfer of charging current to further cordless devices in a very simple and effective manner is possible in a series circuit formed by the mechanically and electrically connected modules.

In EP-A 0 203 847, which is not pre-published, but which constitutes state of the art in accordance with Article 54(3) EPC, a similar charging system is disclosed. However, this prior charging system does not show a current regulated source of charging current pulses.

Furthermore, a battery charger is known from US-A 3 943 423. In this battey charger a transistor switching circuit is provided which supplies a series of periodic recharging impulses to the batteries at comparable voltage and current levels.

Subclaims 2 to 7 are directed to further advantageous embodiments of the invention.

## BRIEF DESCRIPTION OF THE DRAWINGS

Fig. IA is a perspective view of a first embodiment of the present invention in an assembled form ready for operation, showing a plurality of individual cordless tools or appliances mounted upon the multistation modular units of the charging system.

Fig. 1B is a perspective view, corresponding to a portion of Figure 1A, but showing one of the modular units for charging a separate battery power pack as distinguished from a cordless tool or appliance.

Fig. 2 is a perspective view of one of the modular satellite units separated from the base modular unit.

Fig. 3 is a rear exploded view of the base modular unit, the rear housing part being laterally reversed to show the cord storage means therein.

Fig. 4A is a front exploded view of a satellite module.

Fig. 4B is a detailed view of the latching means connection.

Fig. 5 is a section view, taking across the lines 5-5 of Fig. 1A, a satellite module in an operative engagement with the handle of a cordless device, and further showing an extension member on the cordless device supporting the contact elements in the module and making electrical engagement therewith.

Fig. 6A is a sectional view taken along the lines 6A-6A in Fig. 5.

Fig. 6B is an enlarged portion of the extension or rod member on the cordless device.

Fig. 6C is a section view, taken across the line 6C-6C of Fig. 6B.

Fig. 7 is a plan view of a portion of the handle of a cordless device.

Fig. 8 is a portion of Fig. 5, drawn to an enlarged scale, and showing the resiliently biased contact elements in their normally closed position.

Fig. 9 is a detailed view of the circuit-closure plug for the system according to the invention.

Fig. 10 is a schematic illustration of an under-the-cabinet mounting of the multistation modular charger of the present invention;

Fig. 11 is a schematic illustration of a wall mounting of the multistation modular charging system of the present invention.

Fig. 12 is a graph depicting the performance of the system as disclosed in Figs. 1A-11 as distinguished from a conventional capacitor type of charging circuit, showing the average charging current per number of battery cells in series.

Fig. 13A is a pictorial view of a preferred embodiment of a modular unit which can be used interchangeably as a base unit or satellite unit, in multistation charging systems in accordance with a preferred embodiment of the present invention.

Fig. 13B is a plan view of the back half of the modular unit shown in Fig. 13A, as seen from the inside.

Fig. 13C is a plan view of the front half of the modular unit shown in Fig. 13C, as seen from the inside.

Fig. 13D is a cross-sectional view of the modular unit shown in Fig. 13A, the section being taken along section line 13D-13D, to illustrate how the two halves of the modular unit are connected together.

Fig. 13E is a cross-sectional view of the modular unit illustrated in Fig. 13A, the section being taken along section line 13E-13E to illustrate how the unit may be attached to a wall or the like using bolts.

Fig. 14 is a plan view of the back of the modular unit illustrated in Fig. 13A, showing a possible alternative means for fixing the modular unit to a wall or the like using adhesive.

Fig. 15A is a cross-sectional view of the modular unit shown in Fig. 13A, the section being taken along section line 15A-15A, to illustrate the electrical circuit components within the modular unit.

Fig. 15B is a front view of a portion of the unit illustrated in Fig. 15A, partially broken away to expose current carrying circuit components.

Fig. 16A is a pictorial representation of a preferred resistive line cord and associated plugs, which are illustrated in section to expose internal circuit components to view.

Fig. 16B is a schematic diagram of the line cord, and circuit components of Fig. 16A, the plugs being shown diagramatically as dashed lines.

Fig. 17 is a simplified pictorial view of a third embodiment of a modular charging system having multiple charging stations, with associated cordless kitchen appliances and a power cord being shown, in accordance with the present invention.

Fig. 18 is a simplified pictorial view of a variant of the third embodiment of a modular charging system having multiple charging stations, with associated cordless devices, which may be found in a home workshop or the like, and a power cord being shown, in accordance with the present invention.

Fig. 19 is a simplified pictorial view of a variant of the third embodiment of a modular charging system having multiple charging stations, with associated cordless devices, which may be found in a storage area for lawn care tools or the like, in accordance with the present invention.

## DESCRIPTION OF THE EMBODIMENTS

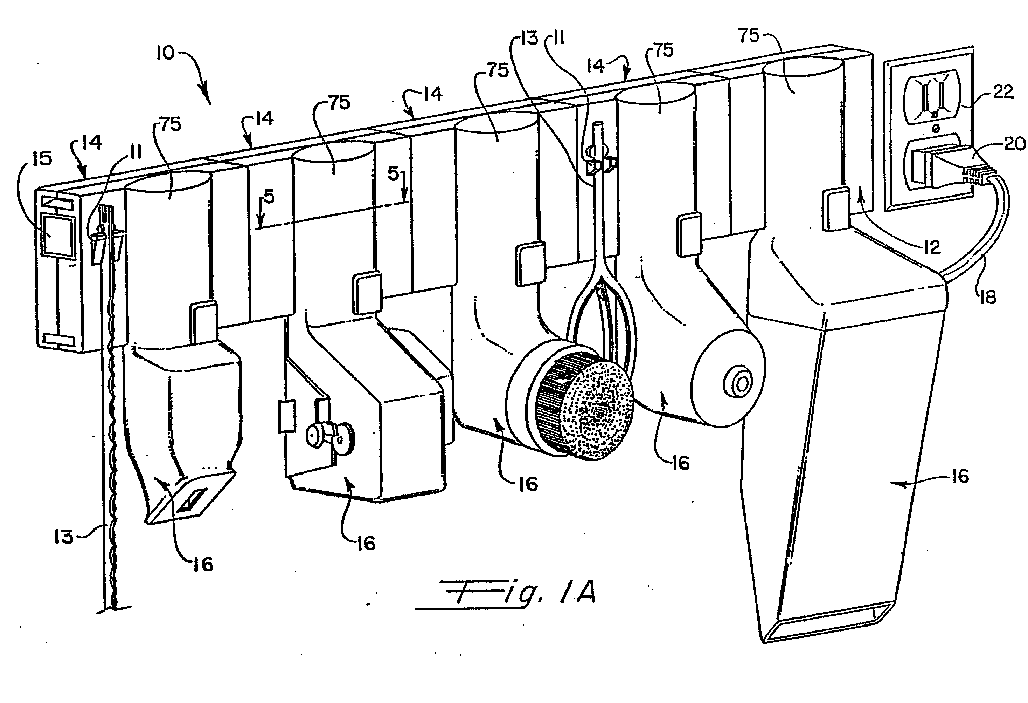

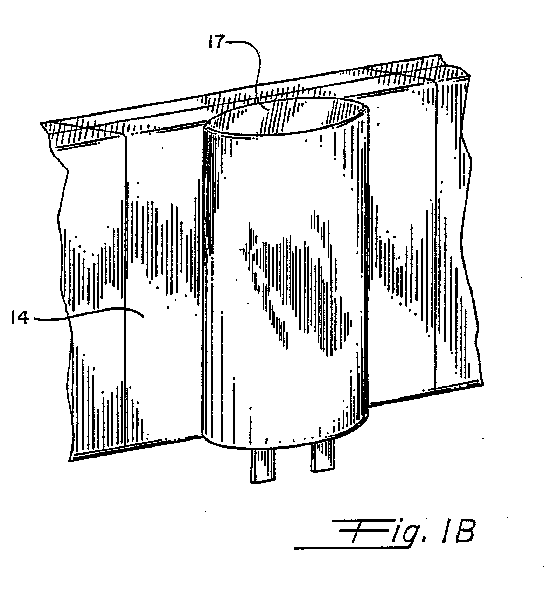

Referring to Fig. 1A, there is shown an assembled multistation modular charging system 10 arranged on a wall surface, not shown. A base modular unit (module) 12 is shown at the right of the figure, and a plurality of satellite modular units (modules) 14 are shown connected in a linear array extending to the left from the base unit 12. Connected to each of the modular units including the base unit is a battery-operated power tool, appliance, or other cordless device 16 having a handle 75, as shown, which not only will be stored when not in use but will receive a charge from the modular charging system 10 according to the invention. Additionally, supports 11 may be provided on the modules for holding tool part 13 and the like. A circuit-closing end plug 15 completes the series circuit formed by all the modules. Also shown is a power cord 18 connected to the base modular unit 12, having a plug member 20 for cooperation with a suitable a.c. outlet receptacle 22. The line cord 18 is preferably a resistive line cord, which advantageously be composed of two relatively thin, nichrome wires helically wound about heat-resistance cores formed of respective bundles of heat-resistance fibers. It should be understood that the base modular unit 12 may be positioned at the left of the figure and the modular satellite units 14 can extend therefrom to the right. In this case the cooperative parts to be described below will be reversed, that is, form a mirror image with respect to the former arrangement in the respective charger modular housings. If the a.c. outlet 22 is positioned to the left of the array constituting the charging system 10, as shown, and the system 10 extends to the left as well then the power cord can be neatly secured under the array by means of suitable clips, not shown, depending from the respective modules.

As shown in Fig. 1A, and from left to right therein, the cordless products may consist (for example) of an electric knife, a can opener, a polisher or scrubber, a mixer, and a vacuum cleaner. These cordless products are primarily intended for kitchen use; however, the present invention is equally applicable to a wide variety of crodless devices or separable battery power packs for use in the home or workshop or for industrial or commercial usage.

In Fig. 1B, the multistation system 10 is shown supporting a battery power pack device 17, which is normally used as a power source in other cordless appliances and tools.

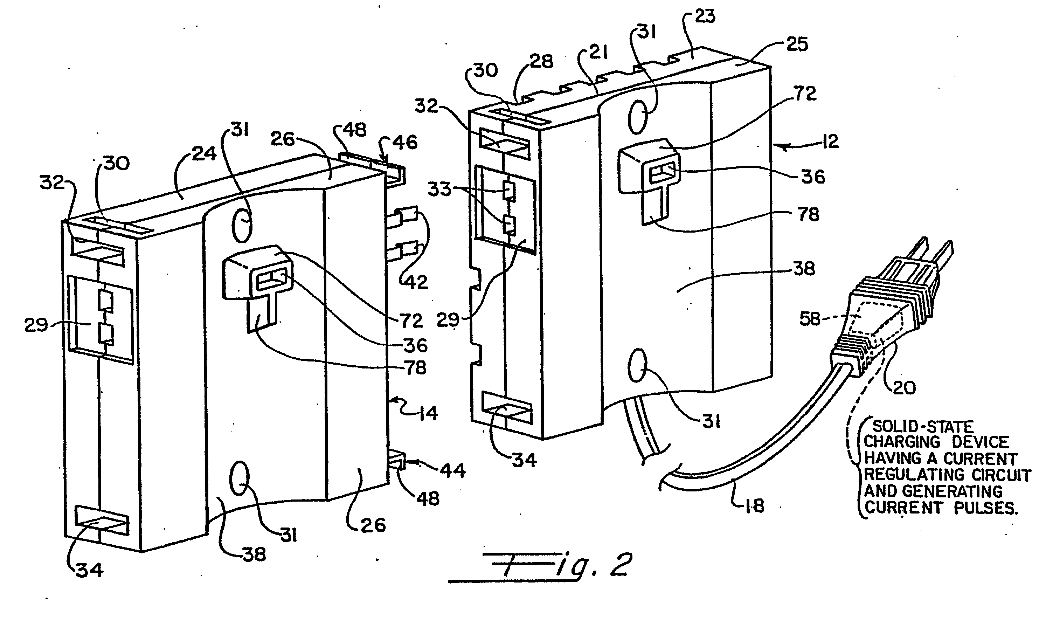

In Fig. 2 the base modular unit 12 and one of the satellite modular units 14 are shown in greater detail. The base modular unit comprises two housing parts 23 and 25 which form a "clamshell" type of housing in which complementary mating portions of the two housing parts join at a common mid-plane 21 parallel to the front and rear faces of the respective housing parts. The rear housing part 23 is provided with notches 28 around its perimeter to provide ventilation openings for cooling purposes. Additionally, the cord 18 can emanate from any one of the notches 28 at any desired location on the perimeter of the base module. The front housing 25 has access holes 31 therein to allow suitable fastener means (such as screws or bolts) to secure the unit to a wall surface. Within a scalloped portion 38 of the face plate or front housing 25 is a further opening 36 for receiving an extension member from the tool or appliance, to be described in detail below. At the left side of the modular base unit 12, as shown, are a pair of spaced apart slots 32, 34 at the top and bottom, respectively, which cooperate respectively with a slot 30 and a similar slot (not visible in Fig. 2) in the bottom wall. Between these slots 32, 34, located in the upper portion of the unit, is another pair of slots 33 arranged within a recessed portion 29 in a vertical alignment (see also Fig. 1A).

The modular satellite unit 14 also has two housing parts 24, 26, and the face plate portion has access holes 31 and an opening 36 in a shaped portion 38 thereof, similar to that described above for the modular base unit 12. To the left of the satellite module, the slot construction is shown to be similar to that described for the base unit 12, there being provided spaced apart slots 32, 34, and in between these the slots 33 vertically aligned along the mid-plane between the two housing parts 24 and 26. To the right of the module 14 there is shown extending from the top and bottom portions, respectively, a pair of tongue members 44, 46, having detent portions 48, and in between these a pair of contact prong members 42 adapted to engage the slots 33 of an adjacent module.

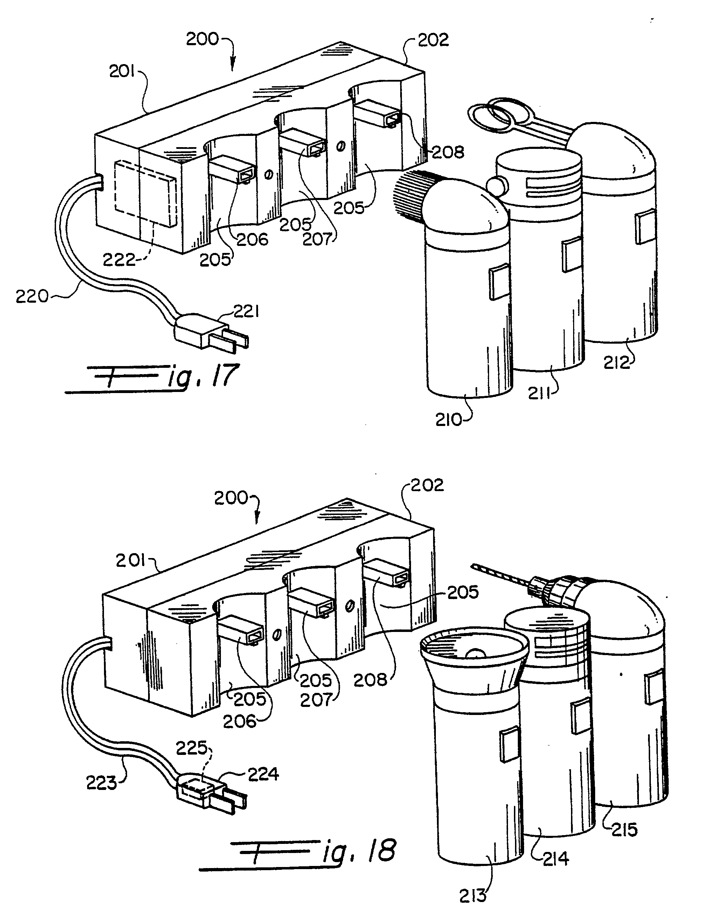

Thus, the tongue member 46 is designed to enter the slot 32, and the tongue member 44 is designed to enter the slot 34, in order to secure the satellite module 14 in removable locking engagement with the modular base unit 12, which feature will be described in greater detail below. Also shown in Fig. 2 is a current pulse producing, current regulated battery charging-circuit in a component 58 housed within the power plug 20. The charging circuit component 58 may also be mounted within the modular base unit 12 or within the cord 18, if desired, and is arranged to generate a series of pulses for charging the batteries in the respective cordless tools, appliances or the like. The charging device 58 is preferably a solid-state charging device produced as an integrated circuit and constitutes a current regulating circuit for generating a series of current pulses, each of which is less than half of the alternating current waveform. An example of a suitable circuit for producing these pulses is illustrated in Fig. 16B.

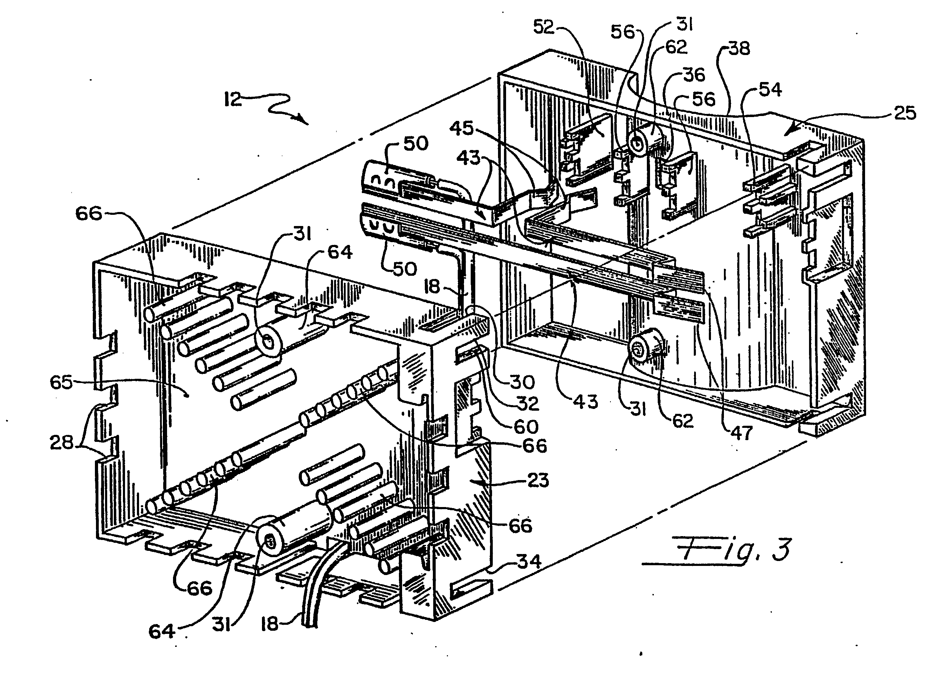

In Fig. 3 the modular base unit is shown with the two housing parts 23 and 25 separated from one another in order to show the contact members or busses 43. These contact members or busses 43 comprise a parallel pair of ribbon-like strips of conductive material, brass, for example, in which the upper member is shown to have a break therein defined by two laterally extending prong members constituting a normally closed pair of contacts 45. Each prong member is resiliently biased towards the other and is provided with an indented portion normally in contact with one another. The power supply cord 18 is shown to have suitable contact slide members 50 for engaging the respective ends of the contact strips 43, while the other ends which define a normally open pair of contacts 47 are bent or biased away from the longitudinal axes of the strips 43, having upturned end portions which provide a contact receiving surface in the proximity of the slots 33 formed in the side of the housing part 25 within the recess 29. In order to secure or trap the contact strips within the housing, upstanding slotted members or lands 52, 54 and 56 are provided within the interior of the housing 23, as shown, as well as corresponding lands (not shown) in the housing 23, and preferably are molded integrally with the housing from a suitable plastic material. Contact strips or busses 43, when positioned by the lands 52, 54, 56, allow the normally closed pair of contacts (prongs) 45 to enter the opening 36 in their normally contact-closing position. Bosses 62 are molded within the front housing part 25 and cooperate with bosses 64 molded within the rear housing part 23, thereby providing the access holes 31 for mounting the base modular unit 12. The rear housing part 23 has a face plate 65, which is provided with a series of upstanding post members 66 forming a generally X-configuration. These posts 66 are so spaced apart from each other so as to allow the power cord 18 to be wrapped around the various posts in order to take up any excess slack in the cord when in use.

Also shown on the right side of the housing part 23 are the slots 32 and 34. Each of these slots, as shown more clearly in Fig. 4B, is provided with a sloped portion 60, the inner edge of which defines a detent portion. The corresponding detent portions 48 of the respective tongue member 44, 46 extending from a satellite module snap past the sloped surface 60 of the respective recesses 32, 34 for locking engagement when the modules 12 or 14 (or two of the same modules 14) are fitted together. An access hole 30 is provided adjacent each detent portion 60 so that the detent 48 can be depressed for disassembly, as best shown in Fig. 4B.

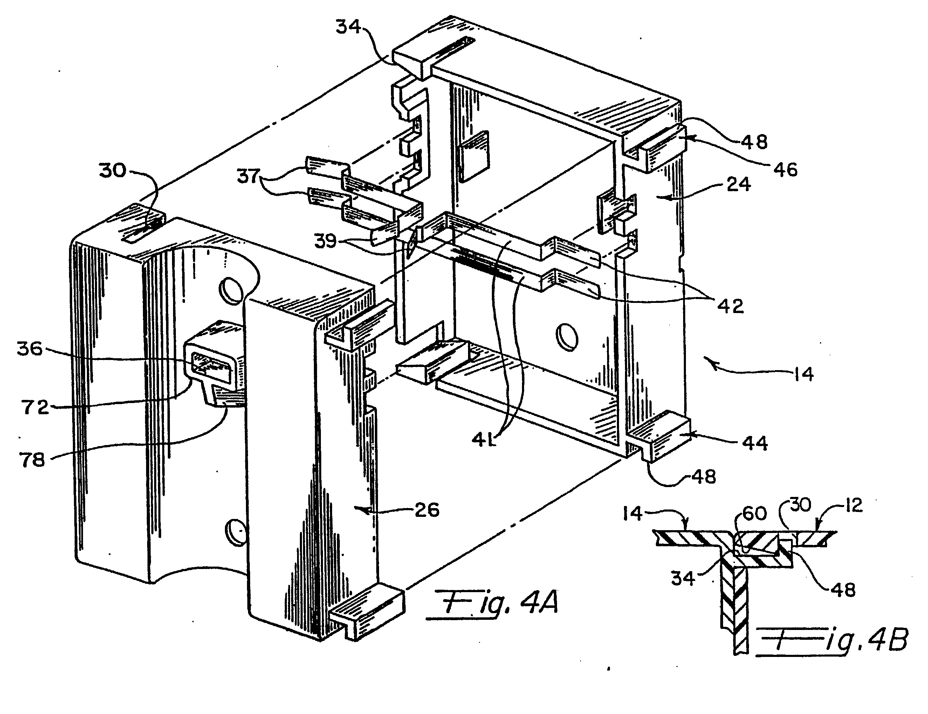

In Fig. 4A there is shown an exploded view of one of the satellite modules 14 showing the arrangement of the contact strips or busses 41. The upper strip is broken at the middle portion, similar to the contact strip or busses 43 in the base module 12, and defines therefor laterally projecting prongs 39, similar to prongs defining the pair of contacts 45 in the base module 12, adapted to be received within the opening 36 on the front face of the housing part 26. The strips or busses 41 have extending contact prongs defining the pair of contacts 42 at one end thereof, and at the other end thereof there are bent portions or receiver prongs defining a pair of contacts 37. The contact strips are fitted to lands or slotted members contained within the front housing part 26 in the same manner as described and shown in Fig. 3 for the base module 12. When two satellite modules are fitted together, the extension prongs constituting the pair of contacts 42 of one module will enter the slots 33 of the adjacent module and thereby slide past and come in contact with the receiver prongs constituting the pair of contacts 37 within that particular module, while at the same time, of course, the tongue member 46, 48 lockingly engage their respective slots 32 and 34, as previously described.

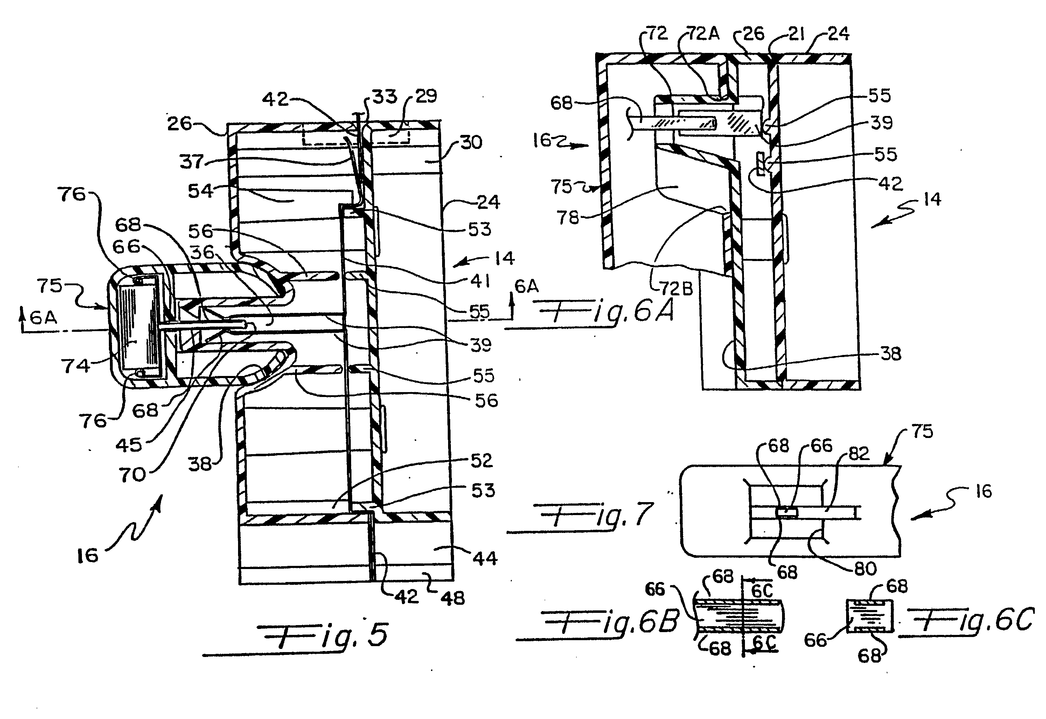

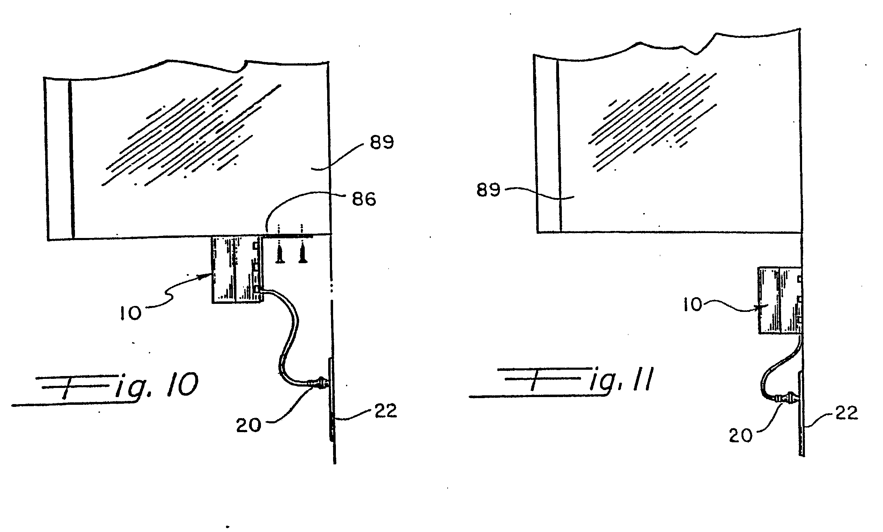

In Fig. 5 the handle 75 of a tool or appliance is shown fitted into the scalloped portion 38 of a typical satellite module 14. As shown, the handle 75 includes a generally recessed portion 80 (see Fig. 7) which fits over the boss or protuberance 72 having the opening 36 therein (see also, Figs. 2, 3, 7 and 8).

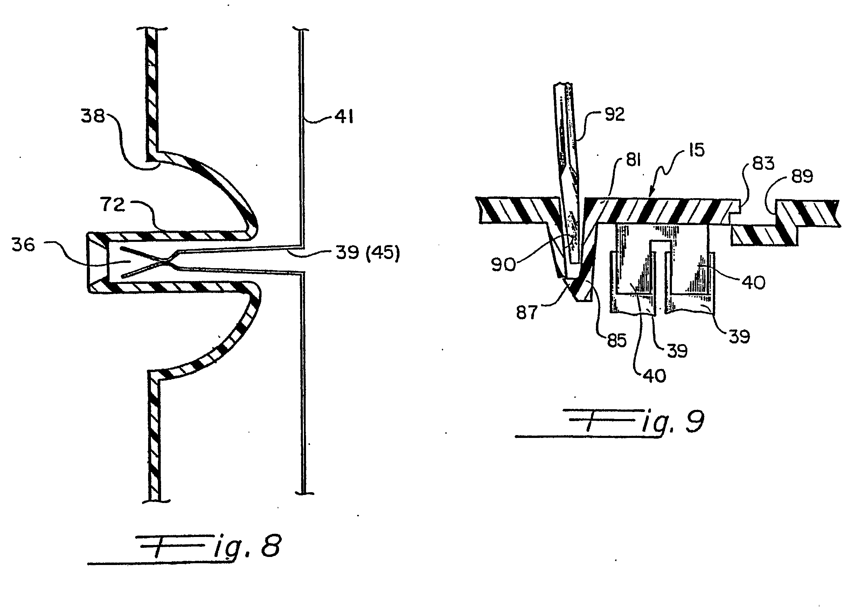

The handle 75 may be provided with suitable guide ribs (shown in Fig. 5) for facilitating the sliding movement of the handle over the protruding boss 72. The top surface of the boss 72 may be generally horizontal, while the bottom surface may be tapered as shown more clearly in Fig. 6A. The top and bottom surfaces of the boss 72 may be provided with indentations 72A and 72B, respectively, so that the corresponding respective edges of the handle may ride along the top and bottom surfaces of the boss 72 and may then be received into the respective indentations with a detent or "snap action", thereby removably retaining the handle 75 of the cordless device 16 on the respective charging module (12 or 14).

Centrally positioned within the recess 80 and extending from a non-conductive block member 74, is a non-conductive extension or rod member 66 having conductive strips or contacts 68 on either side thereof as shown more clearly in Figs. 6B and 6C.

The rod member 66 acts to separate the leaves or prongs 39 or 45 (depending on which module is being used) which are normally in contact with one another and thereby places each of the prongs 39 or 45 in contact with a respective contact strip 68 on either side of the rod member 66, as shown. The contact strips 68 extend, respectively, to either side of the block 74 and make contact with suitable conductive posts 76 associated with the battery, not shown, in the tool or appliance 16. Also, the contact strips 41 are shown secured in place by lands 52, 54, 56 in the front housing 26 and corresponding lands or supports 53, 55, in the rear housing 24 of each module. When both front and rear housings are joined by heat welding methods, the aforesaid lands or supports become juxtaposed by virtue of their respective locations to trap and hence secure the strips 41 therebetween.

Fig. 6A shows the handle 75 of the tool or appliance 16 in position within the scalloped portion 38 of the satellite module 14. The protrusion 72 together with the flange 78 (see Figs. 2 and 4A) are received in the recess of the handle of the cordless device 16.

In Fig. 7, the handle is shown separately in a plan view wherein the rod member 66 with the contact strips 68 on either side thereof is shown in a central position with respect to the recess 80. The slotted area 82 extending from the recess 80 is designed to slide past the flange 78, as best shown in Figs. 4A and 6A.

Fig. 8 is a top view illustrating the removal of the handle of the tool or appliance 16 from the modules 12 and 14. In such cases the prongs constituting contacts 45 (or 39) will close on one another, thus closing the circuit for that module from which the tool is removed.

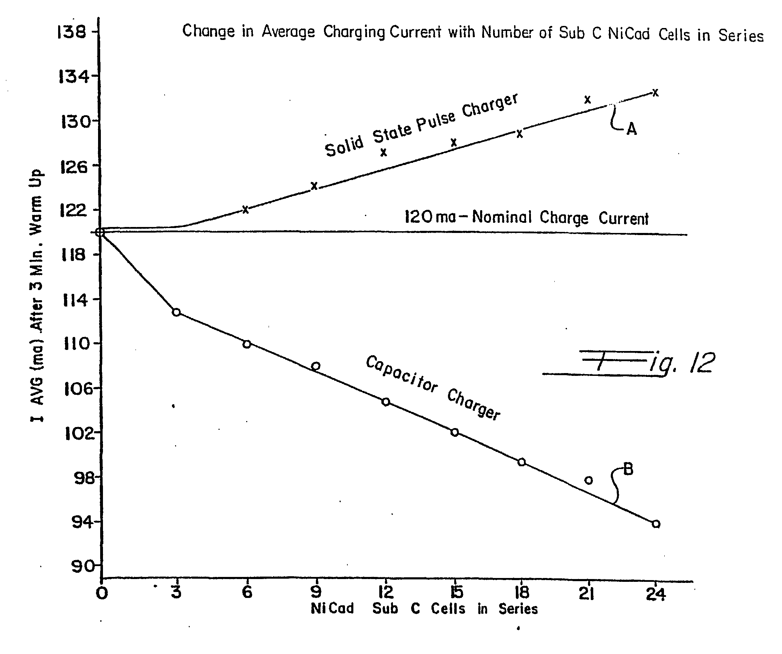

In Fig. 9 the circuit-closing plug 15 is shown having a pair of conductive closure contacts 40 extending from its base 81 in order to make contact with the respective prongs constituting contacts 39 in a module housing (or respective contacts 45 in a base module). The plug 15 fits neatly into the recess 89 in the side of each module for that purpose. The base 81 of the plug 15 is provided with a flange portion 83 on one side thereof and an extended flange 85 having a detent portion 87 on the opposite side thereof. The detent 87 slides down a corresponding flange or sidewall 90 of the associated module and snaps past the edge thereof to make a locking engagement. Meanwhile the flange 83 of the base 81 allows the plug 15 to be seated within the recess 29 as shown. Because the dimensions of the base 81 are smaller than that of the recess 29, a space will be provided on both sides of the base to allow a screwdriver 92 or the like to be inserted therein in order to pry loose the detent 87 for the purpose of removing the plug 15. It will be understood that the plug 15 can be inserted into any one of the modules, including the base module.

When the multistation modular charging system according to the invention is assembled, as shown in Fig. 1A, the satellite modules 14 will be locked together in the manner already described with the respective pairs of contacts 37, 42 making contact through the slots 33, as shown at the top of Fig. 5, including the plug 15. If a tool or appliance 16 is in place, that is, its handle secured to the module, as shown in Figs. 1 and 5, the rod member 66b will separate the normally closed prong contacts 39, putting each of these in contact with the contact strips 68 associated with the battery charging circuit of the cordless tool or appliance, as shown in Fig. 5. The battery or batteries within the tool or appliance will then be recharged while it is in its stored position.

Should the tool or appliance be removed for use elsewhere, the pair of contacts 39 (or pair of contacts 45 if the base module is in use) will resume their usually closed position, thereby maintaining a closed circuit. It will be understood from the above that the series circuit defined by the conductor strips or busses 41 in the satellite modules 14, strips or busses 43 in the base module 12, and closure contacts 40 in the plug 15 are continuously in series; that is, the circuit is never broken by removing either one or all of the tools or appliances from the multistation array 10, since the contacts 39 (or 45) are in contact with contacts 68 on the rod member 66 of the associated tool or appliance, or they are in contact with each other. Further, as cordless tools or appliances are added to the system, they can be introduced into the multistation charger 10 by simply adding on a satellite module 14. Also, a preferred embodiment of the present invention simplifies the battery charging system, requiring only one battery charging circuit 58 for as many as six battery operated cordless devices to be charged, or, on the other hand, as many as 24 cells in a cell-holder device or devices. This particular arrangement avoids the necessity of having a separate battery charging circuit for each tool or appliance or, in the case of separate charging stations, at each battery charging station. Whenever no tool, appliance, battery power pack or the like is present on the modules, all of the prongs 39 and 45 are closed, causing a metallic, conductive short circuit across the current pulse producing circuit 58; nevertheless, no damage is done because of the impedance of the circuit 58, which limits the magnitude of the current. Were a resistive line cord, such as line cord 160 shown in Fig. 16A, further protection against high currents would be provided.

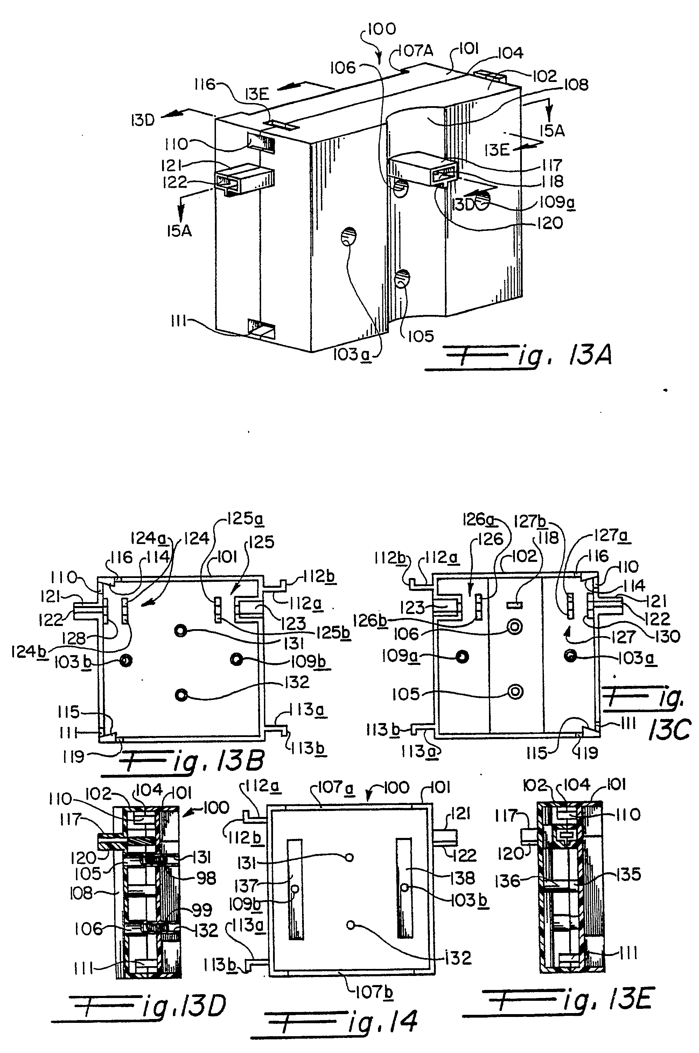

As shown in Fig. 10, the multistation modular charging system 10 of the present invention is mounted under a cabinet 84 by means of an auxiliary L-shaped member 86. Thus, the bosses 64 of each module are used to secure the L-shaped member 89 to the rear face of the module, and then the upper leg of the L-shaped member can be secured to the underside of the cabinet 89 by suitable bolts or screws. In Fig. 11, the multistation modular charging system 10 is mounted in a wall adjacent to the cabinet. However, any convenient mounting is feasible consonant with the teachings of the present invention.

Fig. 12 is a graph illustrating the performance in terms of charging current vs. number of cells of the solid state current pulse charging system according to the invention and as used in the multistation modular array as herein described compared to a conventional capacitor-type charger. It will be seen that the charging current for the system according to the invention, marked as A on the graph, increases as the number of cells increases in number, in this case twenty-four. As shown, the cells are conventional NiCad Sub-C cells connected in series. In the conventional capacitor-type charger marked as B on the graph, charger using well known capacitor discharge methods, the average charging current actually decreases as the number of cells being charged in series increases.

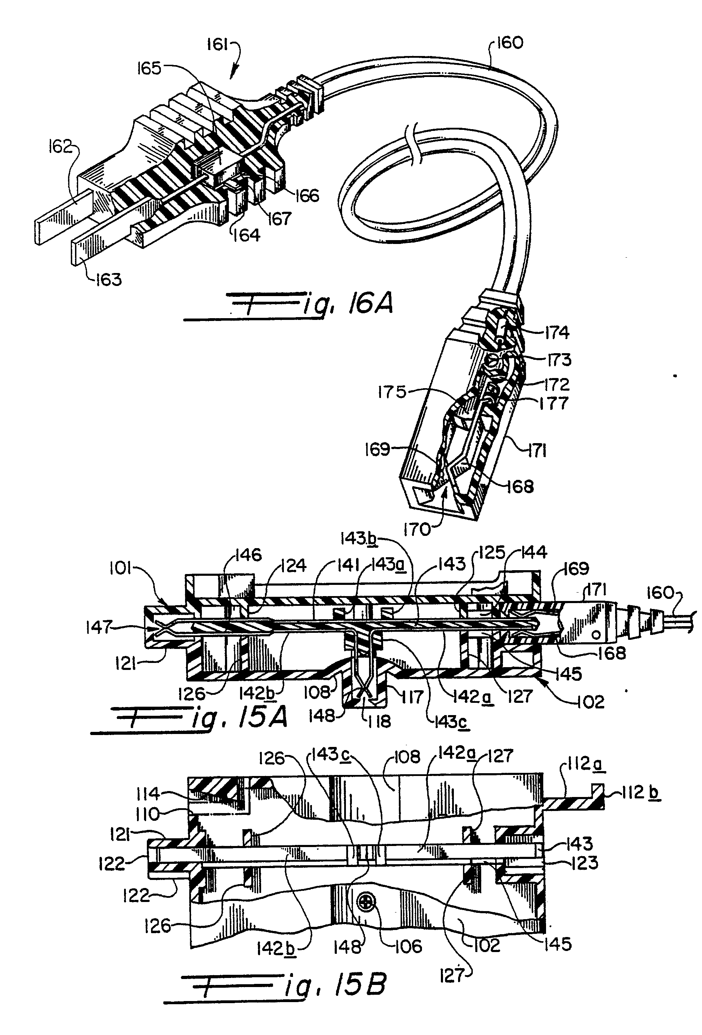

A preferred seond embodiment of a module, generally designated by the numeral 100, is shown in Figs. 13A-13E. It may be used in a preferred realization of a multistation modular charging system of the present invention as a base module and as a satellite module. Referring to Figs. 13A-13D the preferred module 100 comprises two housing parts 101 and 102 constituting respectively a back half part and a front half part. The housing parts 101 and 102 form a "clamshell" type of housing in which complementary mating portions of the housing parts join at a common mid-plane 104. The housing parts 101 and 102 are fixedly connected to one another by a pair of screws which are counter sunk within respective bores 105 and 106 visible on the front housing part 102. The rear housing part 101 is provided with notches 107$\underline{a}$ and 107$\underline{b}$ along its top and bottom to provide ventilation openings for cooling purposes. The front part 102 of the housing is provided with access holes 103$\underline{a}$ and 109$\underline{a}$ therein to allow suitable fastener means (such as screws or bolts) to secure the module 100 to a wall surface. A vertically extending arcuate surface 108 is provided on the outwardly facing front surface of the front part 102. This surface 108 is shaped to compliment a surface of a portion of a cordless device, preferably the handle thereof as illustrated in Fig. 1A, so that the cordless device may be positioned thereon. On the left side of the module 100 near its top and bottom are a pair of slots 110 and 111. On the right side of the module 100, near the top and bottom are a pair of tongue members 112$\underline{a}$ and 113$\underline{a}$ having respective upstanding detent portions 112$\underline{b}$ and 113$\underline{b}$. The module 100 is to be mechanically connected to an adjacent identical module simply by engaging its tongue members 112 and 113 in slots corresponding to the slots 110 and 11 of an adjacent module and so on until as great a number of modules as desired are assembled in a horizontal configuration, in much the same fashion as the embodiment illustrated in Fig. 1A. To assemble the modules, the tongue members 112 and 113 are designed to enter the slots 110 and 111 of an adjacent module to secure the adjacent modules to one another in removable locking engagement, the detent portions 112$\underline{b}$ and 113$\underline{b}$ preventing the modules from becoming accidentally disengaged. To disconnect one unit from the next, the tongues 112 and 113 are simply sprung respectively downwardly and upwardly by a tool, such as a screwdriver, inserted into the interior of the unit 100 via respective slots 116 and 119 (Fig. 13B) in the top wall of the unit, one slot 116 being visible in Fig. 13A near the slot 110. The similar slot 119 (Fig. 13B) is provided in the bottom wall of the unit 100 near the slot 111. The detent portions 112$\underline{b}$

and 113$\underline{b}$ of the tongue members 112$\underline{a}$ and 113$\underline{a}$ respectively come into sliding engagement with inclined surfaces 114 and 115, respectively when adjacent modules are being mechanically connected or disconnected. The inclined surfaces 114 and 115 are defined by integral portions of the parts 101 and 102 adjacent to the slots 110 and 111, respectively.

A hollow protuberance or boss 117 extends outwardly from an upper central area of the arcuate surface 108 and beyond the front surface of the front housing part 102. An opening 118 is provided suitably in a front surface of the hollow boss 117 for the purpose of receiving a contact-bearing member provided in a recess within a shaped portion, e.g. handle of a cordless device to be recharged. An downwardly extending flange 120 is provided on the boss 117.

A second hollow boss or protuberance 121 extends outwardly from the left side of the module 100. An opening 122 is provided within the protuberance 121 into the interior of the unit 100. A recessed bore 123 (Figs. 13B, 13C) is provided within the right side of the module 100, this bore being aligned with the opening 122 and being so shaped, positioned and dimensioned that adjacent modules may be mechanically engaged one to the next with their respective protuberances 121 positioned within the respective bore 123 of the next unit.

As seen in Figs. 13B-13D, the back part 101 includes a pair of trusses 124 and 125, formed integrally therewith, which extend into the interior of the module 100, and the front part 102 includes a pair of trusses 126 and 127, formed integrally therewith, which extend into the interior of the module 100. The ends of the trusses 124-126 are respectively provided with end portions 124$\underline{a}$-127$\underline{a}$ and 124$\underline{b}$-127$\underline{b}$ which extend beyond the trusses 124-127 proper. The trusses 124-127 are positioned and dimensioned so that when the parts 101 and 102 are assembled, the end portions 124$\underline{a}$, 124$\underline{b}$ of the truss 124 contact the end portions 126$\underline{a}$, 126$\underline{b}$ of the truss 127 and the end portions 125$\underline{a}$, 125$\underline{b}$ of the truss 125 contact the end portions 127$\underline{a}$ and 127$\underline{b}$ of the truss 127. Also extending outwardly from the interior walls of the back part 101 and the front part 102 are respective slotted support members 128 and 130, respectively, which with the trusses 124-127 serve to support a circuit supporting structure, when assembled as best seen in Figs. 15A and 15B.

Referring briefly to Fig. 13D, a cross-sectional view of the unit 101 illustrated in Fig. 13A shows a pair of threaded bores 131 and 132 which extend through the back part 101 and are aligned with the screw-receiving bores 105 and 106 respectively. Respective screws 98 and 99 are threadedly engaged with the respective threaded bores 131 and 132 to fixedly connect the back and front parts 101 and 102 to one another.

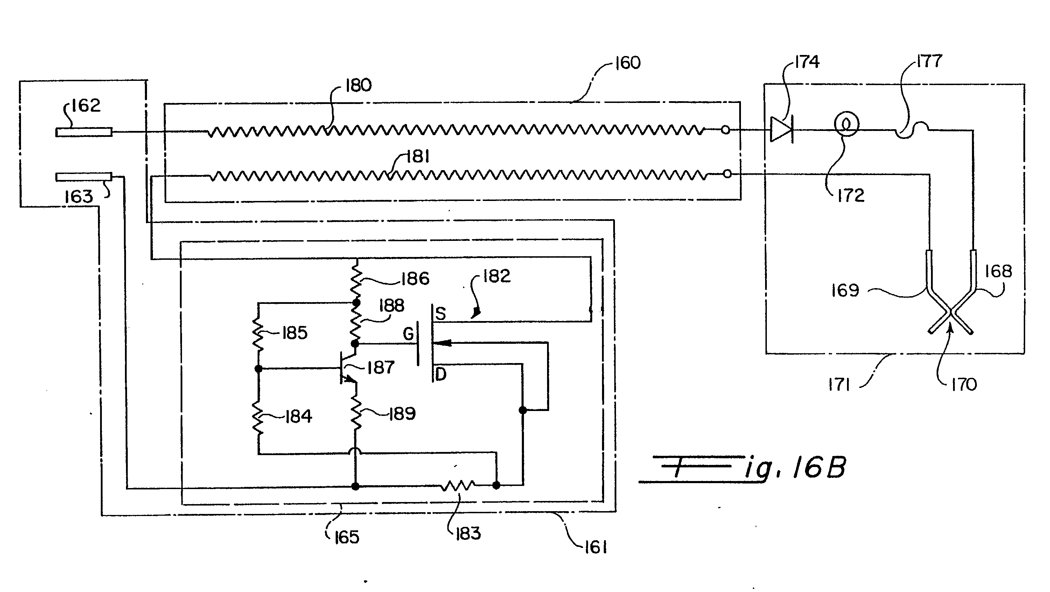

In order to mount the unit 100 on a wall, screws or bolts, not shown, may be inserted into the openings 103$\underline{a}$ and 109$\underline{a}$ in the front part 102 with the smaller diameter portion extending through bores within respective guides composed of two integral members, one of members 135, being visible in Fig. 13E is an integral portion of the back part 101. The front part 102 includes a further member 136 having a bore of somewhat larger diameter which is aligned with the smaller diameter in the guide 135. The bore within the guide 136 is of sufficient diameter to receive the head of a screw or bolt and includes a land therein for providing a stop for the head of the screw or bolt. The screws or bolts extend outwardly from the back through holes 103b and 109b (Fig. 13B). An alternative technique for mounting the module 100 on a flat wall surface is illustrated in Fig. 14 which is a plan view of the back of the module 100, showing respective vertical lands 137 and 138 which having an adehsive material thereon to fix the module to the flat wall surface.

The circuit for distributing d.c. charging current to the cordless device is best seen in Figs. 15A and 15B, to which specific reference is made. As shown, d.c. current carrying busses 141, and 142a and 142b are fixed to opposite surfaces of an insulating support 143 made of a plastics material. The busses 141, 142a and 142b may be fixed to the support 143 using conventional bonding techniques, such as sonic welding. The support 143, with its associated busses 141, 142a and 142b is positioned within the interior of the housing parts 101 and 102 on the trusses 124-127, the support 143 extending through slots defining by the abutting ends of the trusses 124-127. The trusses hold the support 143 against and prevent horizontal and vertical movement. Axial movement of the support 143 within the module 100 is prevented by integral extensions 144 and 145 which extend outwardly from the support 143 and are so positioned and dimensioned that they fit between each of the trusses 125 and 127 and inside surfaces of the right wall of the parts 101 and 102, respectively. The left end portion 146 of the support 143 is slightly enlarged, with the busses 141 and 142b extending outwardly beyond the support 143 to define a pair of normally closed spring contacts 147 which are positioned within the protuberance 121. The busses 142a and 142b extend outwardly from one surface of the carrier 143 to define a second pair of normally closed spring contacts 148 positioned within the hollow boss 117. The support 143 includes integral extensions 143a, 143b and 143c which aid in the positioning and supporting of the busses and the pair of contacts 147. End portions of the busses 141 and 142a shown toward the right in Fig. 15A are positioned slightly inward from the end and are fixedly spaced apart to receive respective contacts of a pair of normally closed spring contacts, such as the contacts 147 of an adjacent module or to receive a pair of similar contacts which carried on an end of a power cord, such as the resistive line cord shown in Fig. 16A.

Turning to Fig. 16A, an exemplary preferred line cord and end connectors (plugs) particularly suitable for use in conjunction with the module unit 100 illustrated in Figs. 13A-13E, 15A and 15B and as component of a multistation charging system using a plurality of such units includes a two lead resistive line cord 160 having a plug 161 on one end thereof having a pair of contact blades 162 and 163, which are to be inserted into ao conventional a.c. wall outlet. The plug 161 is preferably made of a conventional plastics material molded so as to include fins 164 on its outer surface to aid in cooling. An encapsulated, integrated, circuit 165 is molded within the plug 161 on a heat-conductive member 166, which may perform heat sink functions as well. In order to aid in heat dissipation, one or more heat conductive members extend from the encapsuled circuit 165 and its heat sink 166 to one or more of the fins 164 to effect better heat transfer, one such member 167 being shown for purpose of illustration. One of the blades 162 in the plug 161 is directly conductively connected to one of the resistive leads within the cord 160, the other blade 163 is connected to the input side of the integrated circuit 165. The output side of the current regulated, current pulse producing circuit 165 is conductively connected to the other resistive lead within the cord 160. The other ends of the respective leads within the cord are connected to respective spring contacts 168 and 169 constituting a pair of contacts 170 housed within and shrouded by a shaped housing 171 molded of a plastics material. The one resistive lead in the cord 160 extending from the circuit 165 to the contact 168 is connected thereto via a circuit protecting device such as a fuse 177 housed within the shaped housing (plug) 171. If desired, a light emitting device or lamp 172 could also be provided in series with the fuse 177 so a user could visually determine if the system is in operation, the lamp being visible via an aperture 173 in the housing 171. A rectifier diode 174 is provided within the plug 171 in series with the lamp 172 and fuse 177. The diode 174 is part of the current regulated, current pulse producing circuit, which also includes the integrated circuit 165 and the resistive leads within the line cord 160. The spring contacts 168 and 169 are fixed to opposite sides of an insulating support 175 supported within the housing 171.

When a user wishes to supply d.c. charging current pulses to the modular charger unit 100, he needs only to insert the shaped housing 171 (Fig. 16A) into the bore 123 ( Figs. 13B, 13C and 15A, 15B) which is dimensionsed and shaped to complement the housing 171. As a result, the contacts 168 and 169, which are normally closed, are spread apart, and come into engagement with the bosses 141 and 142a, respectively; thus d.c. charging current pulses from the d.c. pulse producing circuit, constituted by the integrated circuit 165, diode 174 and the resistive line cord 160, are supplied to the module 100 and to a battery or batteries within a cordless device positioned as required on the module 100 with its current receiving contacts in electrical connection with the pair of contacts 148. Similarly, were a plurality of identical modules connected electrically and mechanically, as indicated above, to constitute a multistation system, a plurality of cordless devices could be recharged.

The shaped housing 171, on the output end of the line cord 160, desirably may be so dimensioned and shaped, and the normally closed pair of spring contacts 168 and 169 so positioned, with respect to the recess 80 (see Fig. 7) in the handle 75 of a device such as a tool or appliance, the shaped housing 171 can be inserted into the recess 80 to recharge the battery or batteries within one device even when it is not in place on the multistation charger. It is to be appreciated that the shape and dimensions of the housing 171 and the recess 80 can differ from those illustrated, it being required only that the two parts be complimentary.

The pair of contacts 170 could, if desired, be normally open, were one to wish to prevent current flow when the plug defined by the housing 171 has not either been inserted into a device or be charged or into a module or multistation charging system having one or more devices to be recharged in place.

A simplified schematic drawing of the circuit composed of the structure illustrated in Fig. 16A is shown in Fig. 16B, the line cord 160 being shown in phantom with its resistive leads 180 and 181 being shown in schematic representation, the lead 180 extending from the blade 162 to one terminal of the rectifying diode 174, its other terminal being connected to one terminal of the lamp 172. The other terminal of the lamp 172 is connected to one terminal of the fuse 177, its other terminal being conductively connected to the spring contact 168 of the pair of contacts 170. The other contact 169 of the pair of spring contacts is conductively connected to one end of the resistive lead 181. The other end of the resistive lead 181 is conductively connected to the source electrode S of a metal-oxide-silicon-field-effect-transistor (MOSFET) 182, hereinafter referred to as a MOSFET, having its drain electrode D connected to the blade 163 of the plug 161, via a first resistor 183, which serves as feedback resistor. Second, third and fourth resistors 184-186 are connected in series between the connection between the drain electrode of the MOSFET 182 and the end of the resistive lead 182 which is connected to the source electrode S of the MOSFET 182. The circuit point between the second resistor 184 and the third resistor 185 is connected to the base electrode of an npn control transistor 187, which has its collector conductively connected, via a fifth resistor 188, to the circuit point between the third and fourth resistors 185 and 186. The circuit point between the collector of the transistor 185 and the fifth resistor 188 is conductively connected to the gate electrode G of the MOSFET 182. A sixth resistor 189 is connected between the emitter of the transistor 187 and that end of the feedback resistor 183 which is conductively connected to the blade 163. The MOSFET 182 desirably has a relatively high transconductance (G) of approximately 2 mhos, while the transistor 187 desirably has a relatively high gain (β) of about 100. It is to be appreciated that other current pulse producing circuits could be used to form the integrated circuit 165 were the rectifying diode formed as a discrete circuit component apart from those portions which are integrated, the diode being positioned in the housing or plug 171, while the remaining components would be in the plug 161, shown in Fig. 16B diagramatically or dashed lines.

It is to be understood that a hybrid circuit may be substituted for the integrated circuit 165. The MOSFET 182 may be formed as a discrete component, the remaining components being provided as an integrated circuit, the thus modified circuit including the discrete MOSFET being encapsulated and thereafter molded within the plug 161.

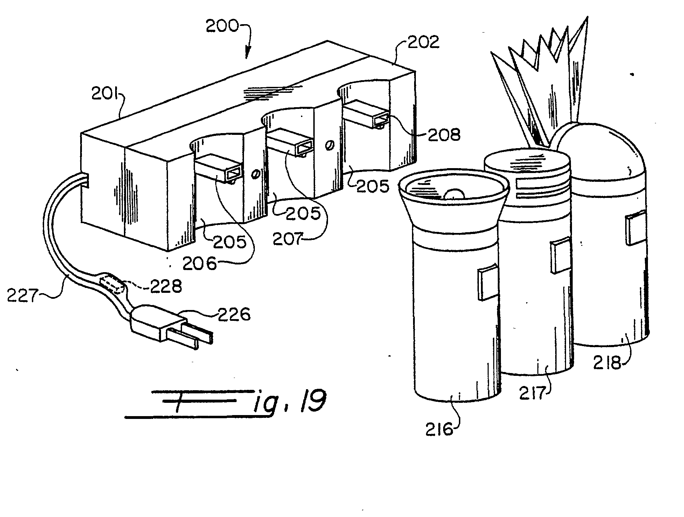

It is to be appreciated that the individual charger modules could be individually configured to provide more than one charging station on its front surface. These individual units could constitute a multistation charging system when connected to a d.c. charging current source. Three such systems, are respectively illustrated, in three variant embodiments, in Figs. 17-19. In each case, the systems include a multistation charger unit 200 constituted by a back part 201 and a front part 202. As illustrated, three vertically extending, arcuate shaped surfaces 205 are provided to receive complimentary shaped portions of cordless devices containing batteries to be recharged. Three respective bosses 206-208, each provided with a respective central aperture and downwardly extending flange corresponding to the opening 118 and flange 120 shown in Fig. 13A. Cordless devices 210-212, which are exemplary for use in a kitchen or the like, are illustrated respectively as a cleaning brush, radio, and eggbeater in Fig. 17. In Fig. 18, cordless devices 213-215 are shown respectively as a flashlight, radio and powered drill, devices such as one may use in a metal or wood working shop. In Fig. 19, a flashlight 216, a radio 217 and a powered clipper 218 are shown, all cordless devices one could use in connection with outside lawn work or the like. A similar arrangement could be provided for use in a bathroom or personal care area.

As illustrated in Fig. 17, a resistive line cord 220, which extends into the unit 200 and has a conventional plug 221 on an end thereof is used to supply a.c. power to a current regulated, current pulse producing circuit 222 housed within the unit 200 and to supply d.c. current pulses to a series circuit having contacts arranged substantially as disclosed in the system embodiments discussed above and illustrated respectively in Figs. 1-12 and in Figs. 13A-13E, 15A, 15B. As shown in Fig. 18, power may be supplied to the unit 200 via a resistive line cord 223 having a wall outlet engaging plug 224 on an end thereof, a current regulated, current pulse producing circuit 225 being encapsulated within the plug 224 in the fashion discussed above in conjunction with Fig. 16A. As shown in Fig. 19, a conventional plug 226 is provided on one end of a resistive line cord 227, a current regulated, d.c. circuit pulse producing circuit 228 being positioned within the resistive line cord. While the entire current regulated, current pulse producing circuitry, including the rectifier, could be positioned within the plug 226 (Fig. 18) or in the line cord 227 (Fig. 19), the rectifier could be positioned in the unit or within a plug (not shown) in the fashion illustrated in Fig. 16A, the unit 200 in these cases being modified to receive such a plug.

## Claims

1. A multistation charging system (10) for charging a plurality of batteries and which includes a plurality of charging stations (12, 14, 100, 200) operatively arranged to releasably support respective devices 2zto be charged and deliver charging current to the batteries, the system including a single source of d.c. charging current, and each of the charging stations being operatively arranged to place the battery or batteries, when positioned at the respective charging stations, in series with the single source of d.c. charging current, characterized by the fact that the batteries are arranged within a plurality of battery-powered, cordless devices (16, 210–218) or within separable power packs (17) which are releasably supported within the charging stations (12, 14, 100, 200), that the single source of d.c. charging current is a current regulated source (58, 165, 222, 225, 228) of charging current pulses, that each of the charging stations (12, 14, 100, 200) is composed of a distinct module which is mechanically releasably connected to at least one adjacent module and has therein a respective pair of normally closed contacts (39, 45, 148) which are spread apart by a spaced apart pair of contacts (68) within a respective one of the devices when the device is present in a respective charging station and that at least some of the modules are provided with a respective additional pair of normally closed contacts (147) which are to be spread apart by a respective additional spaced apart pair of contacts (141, 142a) in an adjacent module when the modules are mechanically connected together.

2. The multistation charging system according to claim 1, characterized by the fact that at least part of the single, current regulated source (58, 165, 225) of d.c. charging current is housed with a plug (20, 161, 224) adapted to be inserted into an a.d. outlet.

3. The multistation charging system according to claim 2, characterized by the fact that the plug (20, 161, 224) is connected by a resistive line cord (18, 160, 223) to the charging system (10, 100, 200).

4. The multistation charging system according to claim 1 or 2, characterized by the fact that at least part of the single, current regulated source (228) of d.c. current is housed within a line cord (227).

5. The multistation charging system according to claim 1, characterized by the fact that at least part of the single, current regulated source (222) of d.c. current is housed at least in part within one of the charging stations (12, 14, 100, 200)

6. The multistation charging system according to any one of claims 1–5, characterized by the fact that the single, current regulated source (58, 165, 222, 225, 228) of d.c. current at least in part is composed of an integrated circuit.

7. The multistation charging system according to any one of claims 1–6, characterized by the fact that at least some of the plurality of charging stations (200) are configured to provide more than one charging station on its front surface.

## Revendications

1. Chargeur à postes multiples (10) pour charger une pluralité de batteries, comprenant une pluralité de postes de chargement (12, 14, 100, 200) disposés fonctionnellement pour supporter de façon amovible des appareils respectifs destinés à être chargés, et pour fournir du courant de charge aux batteries, le chargeur comprenant une source unique de courant continu de charge, et chacun des postes de chargement étant conçu fonctionnellement pour brancher la batterie ou les batteries mises en place dans le poste de chargement respectif en série avec la source unique de courant continu de charge, caractérisé en ce que les batteries sont placées à l'intérieur d'une pluralité d'âppareils à piles sands fils (16, 210–218) ou dans des blocs d'alimentation détachables (17), qui sont supportés de façon amovible dans des postes de chargement (12, 14, 100, 200), en ce que la source unique de courant continu de charge est une source d'impulsions de courant de charge (58, 165, 222, 225, 228) à régulation de courant, en ce que chacun des postes de chargement (12, 14, 100, 200) se compose d'un module individuel qui est relié mécaniquement de façon amovible à au moins un module adjacent et qui contient une paire respective de contacts de repos (39, 45, 148) qui seront écartés par une paire de contacts espacés (68) disposés à l'intérieur d'un appareil respectif, lorsque cet appareil est placé dans un poste de chargement respectif, et en ce qu'au moins quelques-uns des modules sont pourvus d'une paire respective supplémentaire de contacts de repos (147) qui seront écartés par une paire respective supplémentaire de contacts espacés (141, 142a) d'un module adjacent, lorsque ces modules sont interconnectés mécaniquement.

2. Chargeur à postes multiples selon la revendication 1, caractérisé en ce qu'au moins une partie de la source unique de courant continu de charge (58, 165, 225) à régulation de courant est logée dans un connecteur (20, 161, 224) destiné à être introduit dans une prise de courant alternatif.

3. Chargeur à postes multiples selon la revendication 2, caractérisé en ce que le connecteur (20, 161, 224) est relié au chargeur (10, 100, 200) par un câble secteur résistif (18, 160, 223).

4. Chargeur à postes multiples selon l'une des revendications 1 ou 2, caractérisé en ce qu'au moins une partie de la source unique de courant continu de charge (228) à régulation de courant est logée dans un câble secteur (227).

5. Chargeur à postes multiples selon la revendication 1, caractérisé en ce qu'au moins une partie de la source unique de courant continu de charge (222) à régulation de courant est logée au moins en partie dans l'un des postes de chargement (12, 14, 100, 200).

6. Chargeur à postes multiples selon l'une quelconque des revendications 1 à 5, caractérisé en ce que la source unique de courant continu de charge (58, 165, 222, 225, 228) à régulation de courant est composée au moins en partie d'un circuit intégré.

7. Chargeur à postes multiples selon l'une quelconque des revendications 1 à 6, caractérisé en ce qu'au moins quelques-uns parmi la pluralité de postes de chargement (200) sont configurés pour présenter plus d'un poste de chargement sur leurs faces avant.

## Patentansprüche

1. Ladevorrichtung (10) mit mehreren Stationen zum Aufladen einer Anzahl von Batterien, welche eine Anzahl von Ladestationen (12, 14, 100, 200) umfaßt, die funktionell derart angeordnet sind, daß sie entsprechende aufzuladende Geräte abnehmbar halten und den Batterien einen Ladestrom zuführen, wobei die Vorrichtung eine einzelne Ladegleichstrom-Quelle enthält und funktionell derart ausgelegt ist, daß sie die Batterie bzw. die Batterien, wenn sie in die entsprechenden Ladestationen eingesetzt sind, mit der einzelnen Ladegleichstrom-Quelle in Reihe schaltet, dadurch gekennzeichnet, daß die Batterien im Inneren einer Anzahl von batteriebetriebenen drahtlosen Geräten (16, 210–218) oder in abnehmbaren Netzteilen (17) untergebracht sind, welche herausnehmbar in den Ladestationen (12, 14, 100, 200) gehalten sind, daß die einzelne Ladegleichstrom-Quelle eine stromgeregelte Quelle (58, 165, 222, 225, 228) für Ladestrom-Impulse ist, daß jede der Ladestationen (12, 14, 100, 200) aus einem einzelnen Modul besteht, der mechanisch abtrennbar mit mindestens einem benachbarten Modul verbunden ist und im Inneren ein entsprechendes Paar von Ruhestromkontakten (39, 45, 148) enthält, welche durch ein in einem entsprechenden Gerät vorgesehenes Paar von im Abstand angeordneten Kontakten (68) auseinandergespreizt werden, wenn das Gerät in einer entsprechenden Ladestation eingesetzt ist, und daß mindestens einige der Module mit einem entsprechenden Paar von zusätzlichen Ruhestromkontakten (147) versehen sind, die durch ein entsprechendes zusätzliches Paar von im Abstand angeordneten Kontakten (141, 142a) in einem benachbarten Modul auseinandergespreizt werden, wenn die Module mechanisch miteinander verbunden sind.

2. Ladevorrichtung mit mehreren Stationen nach Anspruch 1, dadurch gekennzeichnet, daß mindestens ein Teil der einzelnen stromgeregelten Ladegleichstrom-Quelle (58, 165, 225) in einem Stecker (20, 161, 224) untergebracht ist, welcher zum Einstecken in eine Wechselstromsteckdose vorgesehen ist.

3. Ladevorrichtung mit mehreren Stationen nach Anspruch 2, dadurch gekennzeichnet, daß der Stecker (20, 161, 224) durch ein Widerstands-Netzkabel (18, 160, 223) mit der Ladevorrichtung (10, 100, 200) verbunden ist.

4. Ladevorrichtung mit mehreren Stationen nach Anspruch 1, dadurch gekennzeichnet, daß mindestens ein Teil der einzelnen stromgeregelten Ladegleichstrom-Quelle (228) in einem Netzkabel (227) untergebracht ist.

5. Ladevorrichtung mit mehreren Stationen nach Anspruch 1, dadurch gekennzeichnet, daß mindestens ein Teil der einzelnen stromgeregelten Ladegleichstrom-Quelle (222) mindestens teilweise in einer der Ladestationen (12, 14, 100, 200) untergebracht ist.

6. Ladevorrichtung mit mehreren Stationen nach einem der Ansprüche 1–5, dadurch gekennzeichnet, daß die einzelne stromgeregelte Ladegleichstrom-Quelle (58, 165, 222, 225, 228) mindestens teilweise aus einer integrierten Schaltung besteht.

7. Ladevorrichtung mit mehreren Stationen nach einem der Ansprüche 1–6, dadurch gekennzeichnet, daß mindestens einige der mehreren Ladestationen (200) derart gestaltet sind, daß sie auf ihrer Vorderseite mehr als eine Ladestation aufweisen.

EP 0 246 336 B1

_Fig. 1A_

17

14

_Fig. 1B_

EP 0 246 336 B1

SOLID-STATE
CHARGING DEVICE
HAVING A CURRENT
REGULATING CIRCUIT
AND GENERATING
CURRENT PULSES.

_Fig. 2_

_Fig. 3_

EP 0 246 336 B1

Fig. 4A

Fig. 4B

Fig. 5

Fig. 6A

Fig. 6B

Fig. 6C

Fig. 7

EP 0 246 336 B1

_Fig. 8_

_Fig. 9_

EP 0 246 336 B1

$\overline{\overline{\phantom{=}}}ig.$ 10

$\overline{\overline{\phantom{=}}}ig.$ 11

89

86

10

20

22

89

10

20

22

EP 0 246 336 B1

Change in Average Charging Current with Number of Sub C NiCad Cells in Series

Solid State Pulse Charger

$L_A$

120 ma – Nominal Charge Current

Capacitor Charger

B

*Fig. 12*

I AVG (ma) After 3 Min. Warm Up

NiCad Sub C Cells in Series

EP 0 246 336 B1

Fig. 13A

Fig. 13B

Fig. 13C

Fig. 13D

Fig. 14

Fig. 13E

$\mathcal{F}ig.$ 16A

$\mathcal{F}ig.$ 15A

$\mathcal{F}ig.$ 15B

Fig. 16B

EP 0 246 336 B1

Fig. 17

Fig. 18

Fig. 19